# EUROPEAN PATENT APPLICATION

(11) **EP 4 339 776 A1**
(43) Date of publication of application: **20.03.2024**
(21) Application number: 22819496.5
(22) Date of filing: 07.06.2022
(51) Int. Cl.: G06F 9/48

(54) **TASK SCHEDULING METHOD, SYSTEM, AND HARDWARE TASK SCHEDULER**

(30) Priority: 10.06.2021 CN 202110648382
(71) Applicant: Huawei Technologies Co., Ltd., Shenzhen, Guangdong 518129 (CN)
(72) Inventor: SHI, Jiyuan, Shenzhen, Guangdong 518129 (CN); ZHANG, Mingli, Shenzhen, Guangdong 518129 (CN); WANG, Rui, Shenzhen, Guangdong 518129 (CN); ZHOU, Daijin, Shenzhen, Guangdong 518129 (CN); XIONG, Jie, Shenzhen, Guangdong 518129 (CN)
(74) Representative: Thun, Clemens
(86) International application number: PCT/CN2022/097255
(87) International publication number: WO 2022/257898

(57) **Abstract**

A task scheduling method and system, and a hardware task scheduler are disclosed, and pertain to the field of computer technologies. The hardware task scheduler provides task scheduling for a central processing unit CPU core to select a candidate task. After selecting the candidate task, the CPU core actively sends metadata of the candidate task to a first storage area, and actively sends a context of the candidate task to a cache, where the first storage area is located in storage space whose access speed is higher than that of a memory. When performing task switching, the CPU core reads the metadata of the candidate task from the first storage area, and reads the context of the candidate task from the cache. In this way, latency of obtaining the metadata and the context of the candidate task by the CPU core is reduced, and low-latency task switching is implemented.

## Description

This application claims priority to Chinese Patent Application No. 202110648382.9, filed on June 10, 2021 and entitled "TASK SCHEDULING METHOD AND SYSTEM, AND HARDWARE TASK SCHEDULER", which is incorporated herein by reference in its entirety.

### TECHNICAL FIELD

This application relates to the field of computers, and in particular, to a task scheduling method and system, and a hardware task scheduler.

### BACKGROUND

In a multi-task system, a central processing unit (central processing unit, CPU) or a CPU core performs scheduling and switching between a plurality of tasks, to perform different tasks at different time. Latency of task scheduling and switching affects real-time performance of task execution and performance of the entire system.

If a software-based task scheduling method is used, task scheduling and task switching are performed in serial synchronization mode. The task scheduling and the task switching performed in serial synchronization mode consume long time. After the task scheduling returns a candidate task, during the task switching, a memory may further need to be accessed to obtain related information of the candidate task. Accessing the memory consumes long time.

### SUMMARY

This application provides a task scheduling method and system, and a hardware task scheduler, so that low-latency task switching can be implemented, to improve real-time performance of task execution and performance of the system.

According to a first aspect, a task scheduling system is provided. The task scheduling system includes a CPU core and a hardware task scheduler.

The hardware task scheduler is configured to: perform task scheduling to select a candidate task, and actively send metadata of the candidate task to a first storage area.

The CPU core is configured to read the metadata of the candidate task from the first storage area to execute the candidate task.

The first storage area is located in a storage area whose access speed is higher than that of a memory. The first storage area includes internal storage space of the CPU core and/or a cache of the CPU core.

Before executing the selected candidate task, the CPU core needs to send a command to obtain the metadata of the candidate task. If the metadata is stored in the memory, the CPU core needs to consume a large amount of time to read the metadata. In the task scheduling system according to this application, after completing the task scheduling, the hardware task scheduler does not wait for the CPU core to send an instruction to obtain the metadata of the selected candidate task, but actively sends the metadata of the selected candidate task, and sends the metadata to the storage area whose access speed is higher than that of the memory. Therefore, the CPU core may read the metadata from the storage area whose access speed is higher than that of the memory more quickly. Therefore, the task scheduling system according to this application reduces latency of obtaining the metadata by the CPU core. Low-latency task switching is implemented.

According to the first aspect, in a first possible implementation of the first aspect, the metadata of the candidate task includes storage location information of a context of the candidate task, an identifier of the candidate task, and a status of the candidate task.

Identifiers of candidate tasks are used for distinguishing between the candidate tasks.

The context of the candidate task is a minimum data set needed by the CPU core to run the task. When the task is interrupted or the task is switched, the CPU core stores the context of the task. When the task needs to be run, the CPU core reads the context of the task to restore a running environment of the task.

According to the first aspect or the first possible implementation of the first aspect, in a second possible implementation of the first aspect, the hardware task scheduler is further configured to actively send the context of the candidate task to the cache of the CPU core.

The context of the candidate task may be stored in the memory. If the CPU core obtains the context of the candidate task from the memory, a large amount of time is consumed. Because the hardware task scheduler actively sends the context of the candidate task to the cache of the CPU core after completing the task scheduling, the CPU core may read the context from the cache in time. Time consumed by the CPU core to read the context from the cache needs to be less than time consumed by the CPU core to read the context from the memory. This further reduces latency of the task switching.

According to the first aspect, or the first or the second possible implementation of the first aspect, in a third possible implementation of the first aspect, the hardware task scheduler is further configured to actively send the context that is of the candidate task and that is stored in the hardware task scheduler to the cache of the CPU core.

According to the first aspect or any one of the foregoing possible implementations of the first aspect, in a fourth possible implementation of the first aspect, the CPU core is further configured to send the metadata of the switched task to a second storage area. The hardware task scheduler is further configured to: read the metadata of the switched task from the second storage area, and store the metadata of the switched task in the hardware task scheduler.

The second storage area is located in the memory, or is located in a storage area whose access speed is higher than that of the memory, and the second storage area is different from the first storage area.

According to a second aspect, a task scheduling method is provided. The method includes: A hardware task scheduler performs task scheduling to select a candidate task, and actively sends metadata of the candidate task to a first storage area.

The first storage area is located in a storage area whose access speed is higher than that of a memory. The first storage area includes internal storage space of a CPU core and/or a cache of the CPU core. The CPU core is configured to execute the candidate task.

According to the second aspect, in a first possible implementation of the second aspect, the metadata of the candidate task includes storage location information of a context of the candidate task, an identifier of the candidate task, and a status of the candidate task.

According to the second aspect or the first possible implementation of the second aspect, in a second possible implementation of the second aspect, the hardware task scheduler actively sends the context of the candidate task to the cache of the CPU core.

According to the second aspect, or the first or the second possible implementation of the second aspect, in a third possible implementation of the second aspect, the hardware task scheduler actively sends the context that is of the candidate task and that is stored in the hardware task scheduler to the cache of the CPU core.

According to the second aspect or any one of the foregoing possible implementations of the second aspect, in a fourth possible implementation of the second aspect, the hardware task scheduler reads the metadata of the switched task from a second storage area, and stores the metadata of the switched task in the hardware task scheduler.

The second storage area is located in the memory, or is located in a storage area whose access speed is higher than that of the memory. The second storage area is different from the first storage area.

According to a third aspect, a task scheduling method is provided. The method includes: A CPU core reads metadata of a candidate task from a first storage area to execute the candidate task.

The first storage area is located in a storage area whose access speed is higher than that of a memory. The first storage area includes internal storage space of the CPU core and/or a cache of the CPU core.

According to the third aspect, in a first possible implementation of the third aspect, the metadata of the candidate task includes storage location information of a context of the candidate task, an identifier of the candidate task, and a status of the candidate task.

According to the third aspect, or the first possible implementation of the third aspect, in a second possible implementation of the third aspect, the CPU core sends the metadata of the switched task to a second storage area.

The second storage area is located in the memory, or is located in a storage area whose access speed is higher than that of the memory. The second storage area is different from the first storage area.

According to a fourth aspect, a hardware task scheduler is provided. The hardware task scheduler includes a storage and a processor.

The storage is configured to store metadata of one or more candidate tasks.

The processor is configured to: perform task scheduling to select a candidate task, and actively send metadata that is of the selected candidate task and that is stored in the storage to a first storage area.

The first storage area is located in a storage area whose access speed is higher than that of a memory. The first storage area includes internal storage space of a CPU core and/or a cache of the CPU core. The CPU core is configured to execute the selected candidate task.

According to the fourth aspect, in a first possible implementation of the fourth aspect, the metadata of the selected candidate task includes storage location information of a context of the selected candidate task, an identifier of the selected candidate task, and a status of the selected candidate task.

According to the fourth aspect or the first possible implementation of the fourth aspect, in a second possible implementation of the fourth aspect, the processor is further configured to send the context of the selected candidate task to the cache of the CPU core.

According to the fourth aspect, or the first or the second possible implementation of the fourth aspect, in a third possible implementation of the fourth aspect, the storage is further configured to store the context of the selected candidate task.

According to the third possible implementation of the fourth aspect, in a fourth possible implementation of the fourth aspect, the processor is further configured to send the context that is of the selected candidate task and that is stored in the storage to the cache of the CPU core.

According to the fourth aspect or any one of the foregoing possible implementations of the fourth aspect, in a fifth possible implementation of the fourth aspect, the processor is further configured to: read the metadata of the switched task from a second storage area, and store the metadata of the switched task in the storage.

The second storage area is located in the memory, or is located in a storage area whose access speed is higher than that of the memory. The second storage area is different from the first storage area.

According to a fifth aspect, a hardware task scheduler is provided. The hardware task scheduler includes a storage module and a task management module.

The storage module is configured to store metadata of one or more candidate tasks.

The task management module is configured to: perform task scheduling to select a candidate task, and actively send metadata that is of the selected candidate task and that is stored in the storage module to a first storage area

The first storage area is located in a storage area whose access speed is higher than that of a memory. The first storage area includes internal storage space of a CPU core and/or a cache of the CPU core. The CPU core is configured to execute the selected candidate task.

According to the fifth aspect, in a first possible implementation of the fifth aspect, the metadata of the selected candidate task includes storage location information of a context of the selected candidate task, an identifier of the selected candidate task, and a status of the selected candidate task.

According to the fifth aspect or the first possible implementation of the fifth aspect, in a second possible implementation of the fifth aspect, the task management module is further configured to send the context of the selected candidate task to the cache of the CPU core.

According to the fifth aspect, or the first or the second possible implementation of the fifth aspect, in a third possible implementation of the fifth aspect, the storage module is further configured to store the context of the selected candidate task.

According to the third possible implementation of the fifth aspect, in a fourth possible implementation of the fifth aspect, the task management module is further configured to send the context that is of the selected candidate task and that is stored in the storage module to the cache of the CPU core.

According to the fifth aspect or any one of the foregoing possible implementations of the fifth aspect, in a fifth possible implementation of the fifth aspect, the task management module is further configured to: read the metadata of the switched task from a second storage area, and store the metadata of the switched task in the storage module.

The second storage area is located in the memory, or is located in a storage area whose access speed is higher than that of the memory. The second storage area is different from the first storage area.

### BRIEF DESCRIPTION OF DRAWINGS

FIG. 1 is a schematic diagram of an implementation environment according to an embodiment of this application;
FIG. 2 is a flowchart of a task scheduling method according to an embodiment of this application;
FIG. 3 is a time-sequence diagram corresponding to the task scheduling method shown in FIG. 2 according to an embodiment of this application;
FIG. 4 is a flowchart of another task scheduling method according to an embodiment of this application;
FIG. 5 is a time-sequence diagram corresponding to the task scheduling method shown in FIG. 4 according to an embodiment of this application;
FIG. 6 is a flowchart of another task scheduling method according to an embodiment of this application;
FIG. 7 is a time-sequence diagram corresponding to the task scheduling method shown in FIG. 6 according to an embodiment of this application;
FIG. 8 is a schematic diagram of a logical structure of a hardware task scheduler according to an embodiment of this application;
FIG. 9 is a schematic diagram of a hardware structure of a hardware task scheduler according to an embodiment of this application;
FIG. 10 is a schematic diagram of a task scheduling system according to an embodiment of this application; and
FIG. 11 is a schematic diagram of another task scheduling system according to an embodiment of this application.

### DESCRIPTION OF EMBODIMENTS

To make objectives, technical solutions, and advantages of this application clearer, the following further describes implementations of this application in detail with reference to accompanying drawings.

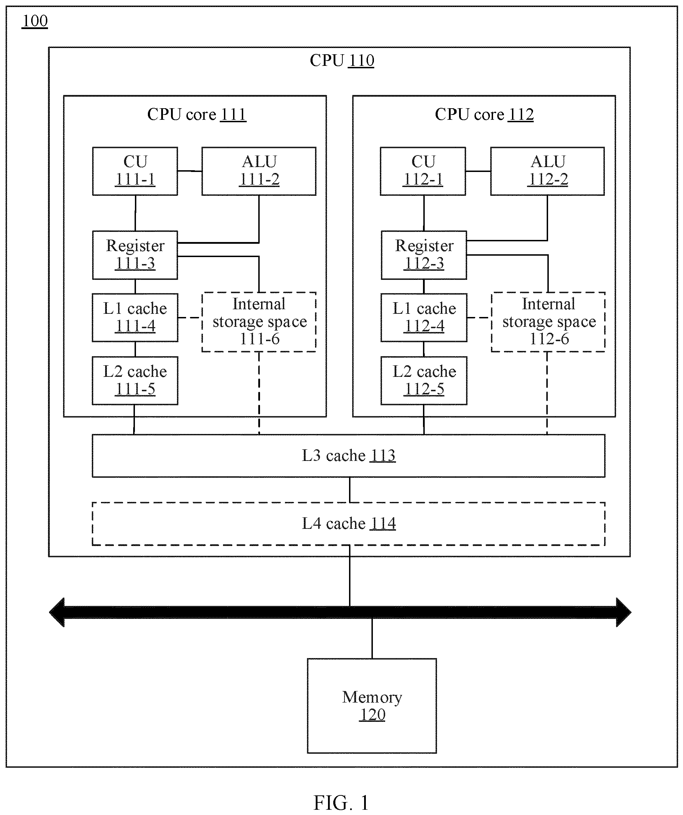

Embodiments of this application provide a hardware-based task scheduling method. FIG. 1 is a schematic diagram of an implementation environment according to an embodiment of this application. Refer to FIG. 1. The implementation environment includes a computer device 100. The computer device 100 is a device that executes a multi-task system, and includes a plurality of types of devices. For example, the computer device 100 may be a mobile phone, may be a personal computer, or may be a server. The computer device 100 includes a CPU 110 and a memory 120. The CPU 110 and the memory 120 are interconnected through a bus. The CPU 110 includes one or more CPU cores (cores). For example, the CPU 110 includes two CPU cores: a CPU core 111 and a CPU core 112. The CPU core includes a control unit (control unit, CU), an arithmetic logic unit (arithmetic logic unit, ALU), a register, a level 1 cache (level 1 cache, L1 cache), and a level 2 cache (level 2 cache, L2 cache). For example, the CPU core 111 includes a CU 111-1, an ALU 111-2, a register 111-3, an L1 cache 111-4, and an L2 cache 111-5. The CPU core 112 includes a CU 112-1, an ALU 112-2, a register 112-3, an L1 cache 112-4, and an L2 cache 112-5. The CPU further includes a level 3 cache (level 3 cache, L3 cache). For example, the CPU 110 includes an L3 cache 113. Some computer devices further include a level 4 cache (level 4 cache, L4 cache). For example, the CPU 110 includes an L4 cache 114. The L1 cache, the L2 cache, the L3 cache, and the L4 cache are collectively referred to as a cache (cache). A highest-level cache is referred to as a last-level cache (last level cache, LLC). For example, when the CPU does not include an L4 cache, an L3 cache is referred to as an LLC. When the L4 cache is a highest-level cache of the CPU, the L4 cache is referred to as an LLC. The CU, the ALU, and the cache are interconnected through an on-chip bus.

The computer device 100 may further include other components, for example, a network adapter, a monitor, a mouse, and a keyboard.

An access speed of the register is higher than an access speed of the memory. Time consumed by the CU/ALU to read data from the register is less than time consumed by the CU/ALU to read data from the memory. Time consumed by the CU/ALU to write data to the register needs to be less than time consumed by the CU/ALU to write data to the memory. An access speed of the cache is lower than that of the register. However, the access speed of the cache is higher than that of the memory. A lower level of the cache indicates a higher access speed of the cache. For example, an access speed of the L 1 cache is higher than that of the L2 cache. The access speed of the L2 cache is higher than that of the L3 cache. The access speed of the L3 cache is higher than that of the L4 cache.

The CPU core executes instructions through the CU to execute a task. If the instructions are related to a data operation, the ALU performs a related operation. During the instruction execution, the CU reads the instructions from the register. During the operation, the ALU reads data from the register. Storage space of the register is very small. Therefore, related instructions or data may not be in the register. If there is no related instruction or data in the register, the CU obtains the instructions or data from the memory. The access speed of the cache is higher than that of the memory. Therefore, when sending a memory access request, the CU first checks whether the cache includes the related instruction or data. If the cache includes the related instructions or data in the cache, the CU reads the related instructions or data from the cache. If the cache does not include the related instructions or data in the cache, the related instructions or data are sent from the memory to the cache, and then sent from the cache to the register. Therefore, when data needed by the CPU core exists only in the memory, latency of reading the data by the CPU is high. If the data exists in the cache, the latency is low. In addition, a lower level of the cache indicates lower latency of reading the data by the CPU.

The CPU core may further include internal storage space. For example, the CPU core 111 includes internal storage space 111-6. The CPU core 112 includes internal storage space 112-6. When the CPU core includes internal storage space, the internal storage space is configured only to store data or instructions needed by the CPU core. Content stored in the internal storage space is not modified by another CPU core. For example, content stored in the internal storage space 111-6 is not modified by the CPU core 112. Content stored in the internal storage space 112-6 is not modified by the CPU core 111. Based on different implementation forms, the content stored in the internal storage space may be pushed by the L1 cache, or may be pushed by the LLC. An access speed of the internal storage space is higher than that of the cache. If the data needed by the CPU core is stored in the internal storage space, the latency of reading the data by the CPU core is also low.

When task switching is needed, the CPU core executes a task scheduling instruction to select a candidate task. After determining the candidate task, the CPU core obtains metadata and a context of the candidate task. Then, the CPU core performs task switching to execute the candidate task. The metadata or the context of the candidate task may exist in the memory. Therefore, latency of obtaining the metadata or the context of the candidate task by the CPU core is high. According to technical solutions provided in embodiments of this application, a hardware task scheduler is added to a computer device, and the hardware task scheduler is responsible for performing task scheduling to select a candidate task. The hardware task scheduler completes the task scheduling in parallel. For example, when the CPU core still executes instructions of a current task, the hardware task scheduler performs the task scheduling in parallel. The hardware task scheduler may further complete the task scheduling in advance. For example, when the CPU core still executes instructions of a current task, the hardware task scheduler has completed the task scheduling. The hardware task scheduler completes the task scheduling in advance or in parallel, so that time consumed by the task scheduling may be ignored. In addition, after completing the task scheduling, the hardware task scheduler does not wait for the CPU core to send an instruction for obtaining the metadata of the candidate task, but actively sends the metadata of the candidate task to a specified storage area. The hardware task scheduler actively sends the metadata of the candidate task, so that the metadata of the candidate task can be sent to the specified storage area earlier. The specified storage area is located in storage space whose access speed is higher than that of the memory. For example, the specified storage area is located in internal storage space of a CPU core, or the specified storage area is located in a cache. When the specified storage area is located in the cache, the specified storage area may be located in a cache at a level in caches at a plurality of levels. For example, the specified storage area is located in a level 1 cache. Alternatively, the specified storage area is located in a level 2 cache. Because the hardware task scheduler actively sends the metadata of the candidate task to a specified storage area with a high access speed, the CPU core can obtain the metadata of the candidate task from the specified storage area with the high access speed in time, so that latency of obtaining the metadata of the candidate task by the CPU core is reduced. If the specified storage area is located in the internal storage space of the CPU core, latency of obtaining the metadata of the candidate task by the CPU core is the lowest. If the specified storage area is located in the cache, a lower level of the cache indicates lower latency of obtaining the metadata of the candidate task by the CPU core. In addition, after completing the task scheduling, the hardware task scheduler actively sends the context of the candidate task to the cache, so that the CPU core can obtain the context of the candidate task from the cache in time, and latency of obtaining the context of the candidate task by the CPU core is reduced. According to the technical solutions provided embodiments of this application, task scheduling time in task switching and scheduling is eliminated, so that latency of obtaining the metadata and the context of the candidate task by the CPU core is reduced, and total latency in the task switching and scheduling is reduced. For detailed solutions of embodiments of this application, refer to the following descriptions.

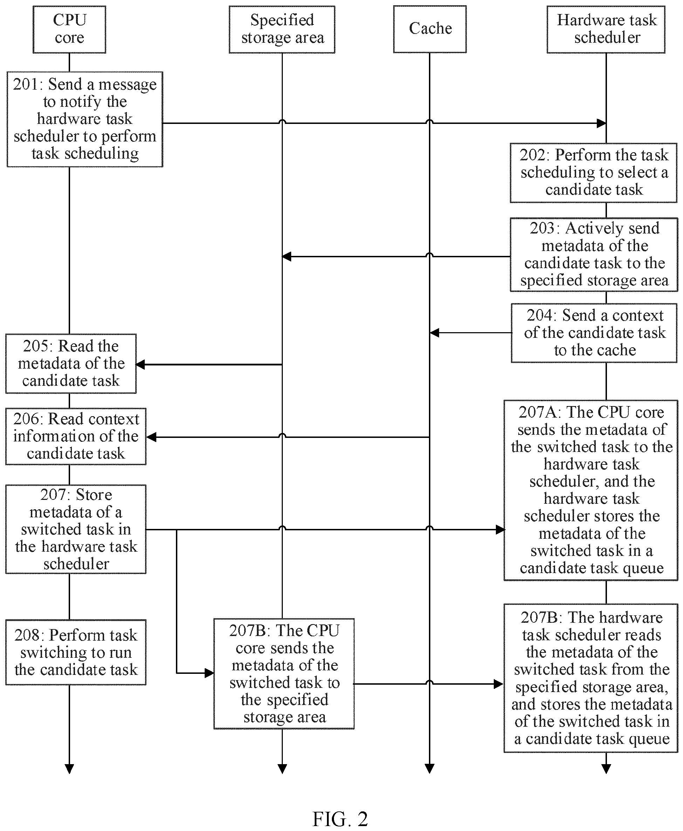

FIG. 2 is a flowchart of a task scheduling method according to an embodiment of this application. In this procedure, a hardware task scheduler first receives a task scheduling instruction of a CPU core, and then performs task scheduling to select a candidate task. After selecting the candidate task, the hardware task scheduler actively sends metadata of the candidate task to a specified storage area, and actively sends a context of the candidate task to a cache. The specified storage area is located in a storage area whose access speed is higher than that of a memory. For example, the specified storage area is located in the cache. Alternatively, the specified storage area is located in internal storage space of the CPU core. Before performing task switching, the CPU core obtains the metadata of the candidate task from the specified storage area with a higher access speed, and obtains the context of the candidate task from the cache. The procedure of the task scheduling method includes the following steps.

Step 201: The CPU core sends a message to the hardware task scheduler, to notify the hardware task scheduler to perform task scheduling.

The CPU core sends the message to the hardware task scheduler in a process of executing the current task, to notify the hardware task scheduler to start to perform the task scheduling earlier to select a candidate task. For example, the CPU core sends a task scheduling instruction to the hardware task scheduler, to notify the hardware task scheduler to start to perform the task scheduling. The CPU core may determine, through a plurality of mechanisms, an occasion for sending the task scheduling instruction. For example, the CPU core may detect running time of the current task. If the running time exceeds a threshold, the CPU core sends the task scheduling instruction. Alternatively, the CPU core may detect a special instruction in code of the current task. When the special instruction is detected, the CPU core sends the task scheduling instruction. The CPU core may alternatively send the task scheduling instruction when execution of the current task is completed, for example, when execution time of the current task expires.

The CPU core sends the task scheduling instruction to the hardware task scheduler. For example, the CPU core writes an identifier of the CPU core into a storage area in the hardware task scheduler, to trigger the hardware task scheduler to perform task scheduling to select a candidate task for the CPU core represented by the identifier of the CPU core.

After the task scheduling instruction is sent, the CPU core continues to execute the current task and perform preprocessing before scheduling. For example, check a status of the current task. If the status of the current task does not allow the task to be switched, the CPU core continues to execute the current task. If the task is allowed to be switched, when detecting a switching occasion, the CPU core performs steps 205 to 208 to obtain a candidate task and perform task switching. The CPU core may detect the switching occasion in a plurality of manners. For example, it is detected whether the execution time of the current task expires, or it is detected whether a special instruction is executed.

When the CPU core continues to execute the current task or perform the preprocessing before the scheduling, the hardware task scheduler performs steps 202 to 204 in parallel to complete the task scheduling to select a candidate task, and sends related information of the candidate task.

The CPU core performs task switching to execute the candidate task selected by the hardware task scheduler. A task that is running in the CPU core before the task switching is performed is referred to as a switched task.

Step 202: The hardware task scheduler performs task scheduling to select a candidate task.

There are one or more candidate task queues in the hardware task scheduler. Each candidate task queue includes metadata of one or more candidate tasks. The metadata includes an identifier of the candidate task, a status of the candidate task, and storage location information of a context of the candidate task.

Identifiers of candidate tasks are used for distinguishing between the different candidate tasks.

The status of the candidate task includes ready, in execution, newly created, blocked, terminated, and the like. The ready state indicates that the task has obtained all necessary resources other than the CPU core, and waits for execution by the CPU core. The hardware task scheduler selects a candidate task from candidate tasks that are already in the ready state, for execution by the CPU core.

The context of the candidate task is a minimum data set needed by the CPU core to run the task. When the task is interrupted or the task is switched, a CPU stores the context of the task. When the task needs to be run, the CPU reads the context of the task to restore a running environment of the task. The memory stores the context of the candidate task. The storage location information of the context of the candidate task includes a storage address of the context of the candidate task in the memory. The storage location information may further include a length of the context of the candidate task. A plurality of manners may be used for indicating the length of the context, for example, a byte offset relative to a storage location of the context in the memory, or a quantity of cache lines (cache lines) occupied by the context.

The metadata of the candidate task may further include a CPU core associated with the candidate task. The CPU core associated with the candidate task indicates affinity between the task and the CPU core. In other words, which CPU core or CPU cores are more expected to execute the task. After receiving the scheduling instruction of the CPU core, the hardware task scheduler preferentially selects a candidate task from candidate tasks associated with the CPU core, for execution by the CPU core. The hardware task scheduler may further indicate the affinity between the candidate task and the CPU core in another manner. For example, the hardware task scheduler maintains a queue for each CPU core, and stores a candidate task with affinity to the CPU core into a queue corresponding to the CPU core.

The metadata may further include information such as a priority and a time slice threshold of the candidate task.

The hardware task scheduler performs task scheduling to select a candidate task. The hardware task scheduler may preferentially select a candidate task from one or more candidate tasks with affinity to the CPU core. The hardware task scheduler may alternatively select a candidate task from one or more candidate tasks for which no CPU with affinity is specified. The hardware task scheduler performs a task scheduling algorithm to complete the task scheduling. The task scheduling algorithm may be a plurality of types of scheduling algorithms, for example, shortest time first scheduling, polling, weight scheduling, and priority scheduling.

Step 203: The hardware task scheduler actively sends the metadata of the candidate task to a specified storage area.

After the candidate task is selected, the hardware task scheduler actively sends the metadata of the candidate task to the specified storage area. The specified storage area is located in a storage area whose access speed is higher than that of the memory. For example, the specified storage area includes an internal storage area of the CPU core. For another example, the specified storage area includes a cache of the CPU core. The cache of the CPU core may be inside or outside the CPU core. For example, an L1 cache or an L2 cache is located inside the CPU core, or an L3 cache or an L4 cache is located outside the CPU core. The hardware task scheduler actively sends the metadata of the candidate task to the specified storage area, so that the CPU core can obtain the metadata of the candidate task more quickly.

The hardware task scheduler may send the metadata of the candidate task to the specified storage area in a plurality of manners. For example, the hardware task scheduler directly sends the metadata of the candidate task to the specified storage area based on a dedicated channel. Alternatively, the hardware task scheduler may send an instruction to a bus. The bus executes the instruction according to a bus protocol to send the metadata of the candidate task to the specified storage area. For example, when the bus is an advanced reduced instruction set computing machine (Advanced RISC Machine, ARM) advanced microcontroller bus architecture (Advanced Microcontroller Bus Architecture, AMBA) bus, the hardware task scheduler sends a cache stashing (cache stashing) related instruction to send the metadata of the candidate task to the cache. According to the cache stashing instruction, the metadata of the candidate task is to be sent to the L3 cache by default. Parameters carried in the instruction include the metadata of the candidate task and a memory address allocated to the candidate task. According to the bus protocol, the bus executes the instruction to store the metadata of the candidate task in a cache that matches the memory address. The hardware task scheduler may further set a level of the cache in the parameters of the instruction, to send the metadata of the candidate task to a cache at a specified level, for example, an L2 cache. When a computer device includes a plurality of CPU cores, the hardware task scheduler may further set an identifier of a CPU core in the parameters of the instruction, to send the metadata of the candidate task to a cache that can be accessed by the CPU core specified by the identifier. The hardware task scheduler sets the memory address for the CPU core in a driver of the hardware task scheduler. When the computer device is started, the CPU core reads the memory address. When reading the metadata of the candidate task based on the memory address, the CPU core directly reads the metadata of the candidate task from the cache.

Step 204: The hardware task scheduler actively sends the context of the candidate task to the cache.

After the candidate task is selected, the hardware task scheduler actively sends the context of the candidate task to the cache, so that the CPU core can obtain the context of the candidate task from the cache in time.

It is similar to step 203 that, the hardware task scheduler may send an instruction to send the context of the candidate task to the cache. A parameter carried in the instruction includes a memory address of the context of the candidate task. When executing the instruction, the bus sends the context that is of the candidate task and that is stored in the memory address to the cache. Similarly, the hardware task scheduler may further set a level of the cache in the parameter of the instruction, to send the context of the candidate task to a cache at a specified level. When the instruction is executed, if the context of the candidate task is already stored in the cache at the specified level, the bus no longer sends the context that is of the candidate task and that is stored in the memory address. If the candidate task is stored in an LLC, and according to the instruction, the context is to be sent to a high-level cache (for example, the L2 cache), the context of the candidate task is pushed from the LLC to the high-level cache. Because the metadata that is of the candidate task and that is stored in the hardware task scheduler includes a storage address of the context of the candidate task, the hardware task scheduler can obtain the memory address of the context of the candidate task. The metadata of the candidate task is sent to the cache by the hardware task scheduler. Therefore, after the CPU core obtains the metadata of the candidate task, the CPU core may also obtain a memory address of the candidate task. After obtaining the memory address of the candidate task, the CPU core reads the context of the candidate task based on the memory address. Because the context of the candidate task has been sent to the cache, the CPU core can directly read the context of the candidate task from the cache.

Step 205: The CPU core reads the metadata of the candidate task.

When the CPU core executes the current task and performs the preprocessing before the task scheduling, the hardware task scheduler has selected the candidate task by performing the task scheduling, and has sent the metadata of the candidate task to the specified storage area. Therefore, the CPU core may read the metadata of the candidate task from the specified storage area. The specified storage area is located in internal storage space or a cache of the CPU core. Therefore, the CPU core can quickly obtain the metadata of the candidate task.

Step 206: The CPU reads the context of the candidate task.

After obtaining the metadata of the candidate task, the CPU reads storage location information of the context of the candidate task from the metadata. The CPU reads the context based on the storage location information. Because the hardware task scheduler sends the context of the candidate task to the cache, the CPU core may read the context from the cache.

Step 207: The CPU core stores metadata of a switched task in the hardware task scheduler.

The CPU stores the metadata of the switched task in the hardware task scheduler, so that the hardware task scheduler stores the metadata of the switched task in a candidate task queue. In subsequent task scheduling, the hardware task scheduler may select the switched task as a candidate task again, so that the switched task can be executed by the CPU core again. The CPU core may store the metadata of the switched task in the hardware task scheduler through a plurality of methods. For example, the CPU core may store the metadata of the switched task in the hardware task scheduler according to either of following two implementations (207A and 207B).

207A: The CPU core sends the metadata of the switched task to the hardware task scheduler, and the hardware task scheduler stores the metadata of the switched task in the candidate task queue.

The CPU core sends the metadata of the switched task to the hardware task scheduler. For example, the CPU core writes the metadata of the switched task into a storage area in the hardware task scheduler, so that the hardware task scheduler reads the metadata of the switched task from the specified storage area, and stores the metadata of the switched task in the candidate task queue. When performing subsequent task scheduling, the hardware task scheduler may select the switched task again, so that the switched task is executed by the CPU core again.

207B: The CPU core sends the metadata of the switched task to the specified storage area, and the hardware task scheduler reads the metadata of the switched task from the specified storage area, and stores the metadata of the switched task in the candidate task queue.

The CPU core sends the metadata of the switched task to the specified storage area. The specified storage area may be located in a storage area whose access speed is higher than that of the memory. For example, the specified storage area includes internal storage space of the CPU core. For another example, the specified storage area includes a cache of the CPU core. The cache of the CPU core may be inside or outside the CPU core. For example, an L 1 cache or an L2 cache is located inside the CPU core, or an L3 cache or an L4 cache is located outside the CPU core. It is similar to step 203 that, the CPU core may send the metadata of the switched task to the specified storage area through a dedicated channel. The CPU core may further send an instruction, so that the metadata of the switched task is sent to the specified storage area. Because storing the metadata of the switched task does not affect execution of the candidate task, the specified storage area may alternatively be located in the memory. The CPU core directly writes the metadata of the switched task into a storage area in the memory.

The CPU core writes the metadata of the switched task into the specified storage area, and triggers the hardware task scheduler to read the metadata of the switched task. Alternatively, the hardware task scheduler detects the specified storage area. Once it is found that the metadata of the task is stored in the specified storage area, the hardware task scheduler reads the metadata of the task from the specified storage area. After the metadata of the task is read, the hardware task scheduler stores the metadata in the candidate task queue of the hardware task scheduler. When performing subsequent task scheduling, the hardware task scheduler may select the task again, so that the task is executed by the CPU core again.

The specified storage area and the specified storage area in step 203 may be located in same storage space. For example, both the specified storage area and the specified storage area in step 203 are located in the L2 cache. Alternatively, both the specified storage area and the specified storage area in step 203 are located in the internal storage space of the CPU core. The specified storage area and step 203 may alternatively be located in different storage space. For example, the specified storage area is located in the L3 cache, and the specified storage area in step 203 is located in the L2 cache. Alternatively, the specified storage area is located in the memory, and the storage area specified in step 203 is located in the L2 cache.

The specified storage area and the specified storage area in step 203 are different storage areas. The CPU core writes the metadata of the switched task into the specified storage area, and the hardware task scheduler reads the metadata of the switched task from the specified storage area. The hardware task scheduler writes metadata of the selected candidate task into the specified storage area in step 203, and the CPU core reads the metadata of the selected candidate task from the specified storage area in step 203. To distinguish between the two specified storage areas, in this embodiment of this application, the specified storage area in step 203 is referred to as a first storage area, and the specified storage area in step 207B is referred to as a second storage area.

Step 208: The CPU core performs task switching to run the candidate task.

After obtaining the context of the candidate task, the CPU core switches the context to execute the candidate task.

Before performing task switching, the CPU core performs preprocessing before the task switching. For example, a running status of a switched task and a memory base address of the task are stored. A modern operating system usually uses a virtual memory management mechanism. For example, if the CPU core has a 32-bit address line, the CPU core may access 4 gigabits (gigabits, Gb) storage space. An address of the 4 Gb storage space is referred to as a physical address. Based on the virtual memory management mechanism, each task (for example, a process) has independent 4 G address space. An address of the independent 4 G address space of each task is referred to as a virtual address. When executing a task, the CPU core needs to translate a virtual address of the task into a physical address, to access a storage unit corresponding to the physical address. A memory management unit (memory management unit, MMU) is responsible for translating the virtual address of the task into the physical address. The address translation depends on the memory base address of the task.

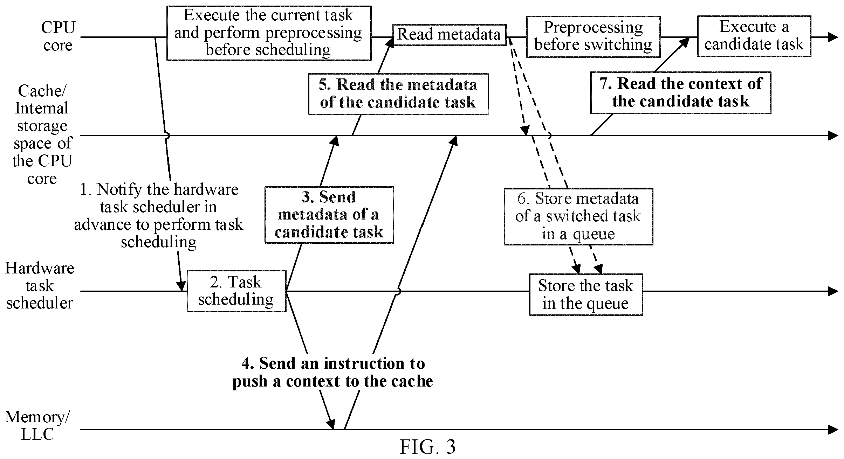

In conclusion, a time-sequence diagram of the task scheduling method according to this embodiment of this application is shown in FIG. 3. The CPU core sends the task scheduling instruction in a process of executing the current task. Therefore, when the CPU core continues to execute the current task, the hardware task scheduler may perform the task scheduling in parallel to select a candidate task. The hardware task scheduler performs the task scheduling in parallel, so that time consumed by the task scheduling may be ignored. After completing the task scheduling, the hardware task scheduler does not wait for the CPU core to send an instruction to trigger the hardware task scheduler to send the metadata of the candidate task, but actively sends the metadata of the candidate task to the first storage area with a higher access speed, so that the CPU core can read the metadata of the candidate task from the first storage area with the higher access speed in time. Latency of obtaining the metadata of the candidate task by the CPU core is reduced. After completing the task scheduling, the hardware task scheduler actively sends the context of the candidate task to the cache, so that the CPU core can read the context of the candidate task from the cache in time. Latency of obtaining the context by the CPU core is reduced. According to the task scheduling method provided in this embodiment, latency of the task scheduling and switching is reduced.

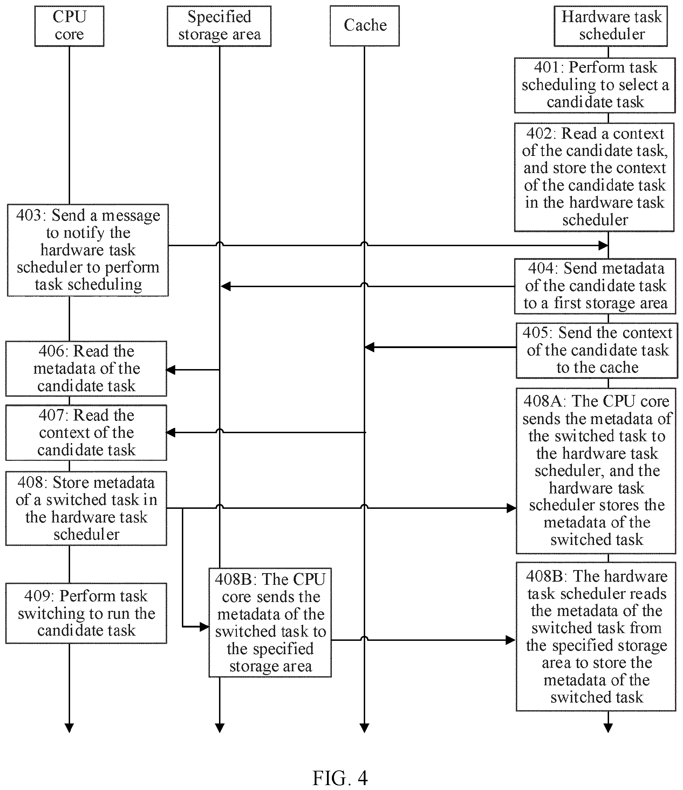

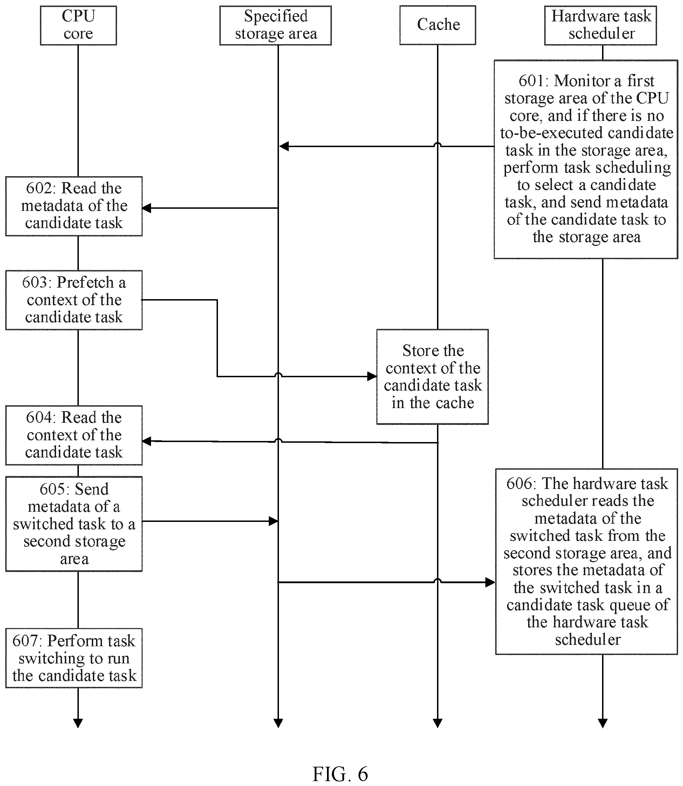

FIG. 4 and FIG. 6 are flowcharts of other two task scheduling methods according to embodiments of this application. For details that are not disclosed in the method embodiments shown in FIG. 4 and FIG. 6, refer to the method embodiment shown in FIG. 3.

FIG. 4 is a flowchart of another task scheduling method according to an embodiment of this application. In this procedure, a hardware task scheduler first performs task scheduling to select a candidate task, pre-reads a context of the candidate task, and stores the context of the candidate task in the hardware task scheduler. When receiving a task scheduling instruction of a CPU core, the hardware task scheduler sends metadata of the candidate task to a first storage area, and sends the context of the candidate task to a cache. Before performing the task switching, the CPU core obtains the metadata of the candidate task from the first storage area with higher access speed, and obtains the context of the candidate task from the cache. The procedure of the task scheduling method includes the following steps.

Step 401: The hardware task scheduler performs task scheduling to select a candidate task.

Step 402: The hardware task scheduler obtains a context of the candidate task, and stores the context of the candidate task in the hardware task scheduler.

After selecting the candidate task, the hardware task scheduler obtains the context of the candidate task, and stores the context in the hardware task scheduler. For example, the hardware task scheduler sends a read instruction to a bus to read the context of the candidate task and store the context of the candidate task in the hardware task scheduler. A parameter carried in the read instruction includes storage location information of the context of the candidate task.

Step 403: The CPU core sends a message to notify the hardware task scheduler to perform the task scheduling.

The CPU core sends a message to notify the hardware task scheduler to perform the task scheduling. For example, the CPU core sends a task scheduling instruction to the hardware task scheduler, to notify the hardware task scheduler to perform the task scheduling. After the instruction is sent, the CPU core continues to execute the current task or perform preprocessing before the scheduling.

The hardware task scheduler has completed the task scheduling in step 401. Therefore, when receiving the instruction, the hardware task scheduler may directly select a candidate task for the CPU core from selected candidate tasks. For example, a candidate task with affinity to the CPU core is selected from the selected candidate tasks. Then, the hardware task scheduler performs step 404 and step 405 to send the metadata and the context of the candidate task.

Step 404: The hardware task scheduler sends the metadata of the candidate task to the first storage area.

Step 405: The hardware task scheduler sends the context of the candidate task to the cache.

The hardware task scheduler already stores the context in the hardware task scheduler in step 402. The context is alternatively stored in a memory. The context may alternatively be stored in the cache of the CPU core. If the context stored in another location is modified after the context is stored in the hardware task scheduler, the context stored in the hardware task scheduler is invalid. If the context stored in the hardware task scheduler is invalid, the hardware task scheduler cannot directly send the context stored in the hardware task scheduler to the cache of the CPU core. Therefore, before sending the context, the hardware task scheduler needs to determine whether the context is valid. There are a plurality of manners to determine whether the context is valid. For example, the hardware task scheduler sets a flag for each context stored in the hardware task scheduler, an external storage (a memory or a cache) modifies the flag after modifying the context, and the hardware task scheduler detects the flag to determine validity of the context. Alternatively, the hardware task scheduler determines the validity of the context by detecting bus consistency.

When the context of the candidate task is valid, the hardware task scheduler sends the context stored in the hardware task scheduler to the cache. In step 203, the hardware task scheduler sends the metadata stored in the hardware task scheduler to the cache. The hardware task scheduler sends the context stored in the hardware task scheduler to the cache, and this is similar to step 203.

When the context is invalid, the hardware task scheduler executes an instruction similar to step 204 to send the context of the candidate task to the cache. In this case, the context sent to the cache is not the context stored in the hardware task scheduler. The context sent to the cache may be stored in the memory. The context sent to the cache may have been stored in the cache.

Step 406: The CPU core reads the metadata of the candidate task.

When the CPU core executes the current task and performs the preprocessing before the task scheduling, the hardware task scheduler has sent the metadata of the candidate task to the first storage area. Therefore, the CPU core reads the metadata of the candidate task from the first storage area, to perform switching to execute the candidate task.

Step 407: The CPU core reads the context of the candidate task.

After obtaining the metadata of the candidate task, the CPU core reads storage location information of the context of the candidate task from the metadata. The CPU core reads the context based on the storage location information. Because the context has been sent to the cache, the CPU core reads the context from the cache.

Step 408: The CPU core stores metadata of a switched task in the hardware task scheduler.

The CPU core may store the metadata of the switched task in the hardware task scheduler through a plurality of methods. For example, the CPU core may store the metadata of the switched task in the hardware task scheduler through a method 407A or a method 407B. The method 408A is similar to the method 207A. The method 408B is similar to the method 207B. Details are not described herein again.

After storing the switched task in a candidate task queue, the hardware task scheduler may perform the task scheduling to select a candidate task again. The hardware task scheduler obtains a context of the candidate task. When a scheduling instruction of the CPU core is received again, the hardware task scheduler directly sends metadata and the context of the selected candidate task to the CPU core.

Step 409: The CPU core performs task switching to run the candidate task.

After obtaining the context of the candidate task, the CPU core switches the context to execute the candidate task.

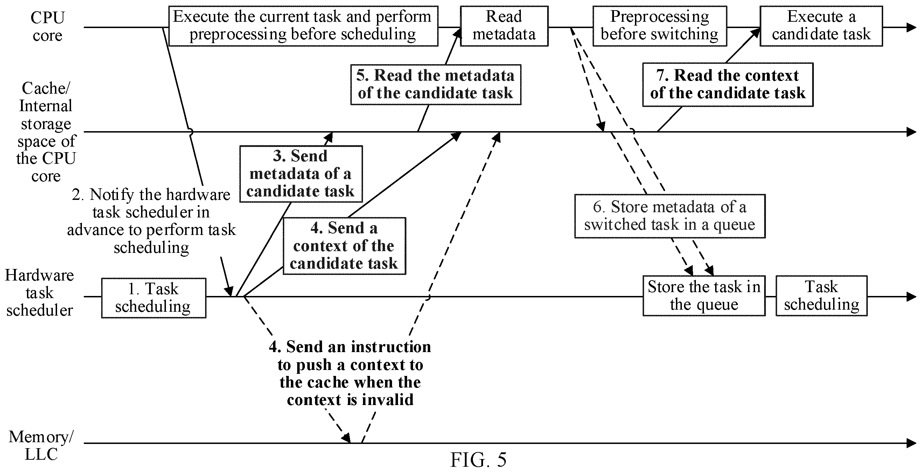

In conclusion, a time-sequence diagram of the task scheduling method according to this embodiment of this application is shown in FIG. 5. Before the CPU core sends the task scheduling instruction, the hardware task scheduler has completed the task scheduling. Therefore, after receiving the task scheduling instruction of the CPU core, the hardware task scheduler may immediately send metadata of the candidate task to the first storage area, and send the context of the candidate task to a cache of the CPU core. The hardware task scheduler completes the task scheduling before the CPU core sends the task scheduling instruction, so that time consumed by the task scheduling can be completely eliminated. Because the task scheduling has been completed in advance, after receiving the task scheduling instruction, the hardware task scheduler may immediately send the metadata and the context of the candidate task. According to the method, the metadata and the context of the candidate task can be sent to a storage area with a higher access speed more quickly, and it can be better ensured that the CPU core immediately obtains the metadata and the context of the candidate task from the storage area with the higher access speed. According to the task scheduling method provided in this embodiment, latency of the task scheduling and switching is reduced.

FIG. 6 is a flowchart of another task scheduling method according to an embodiment of this application. In this procedure, a hardware task scheduler monitors a first storage area of a CPU core. If there is no metadata of a to-be-executed candidate task in the storage area, the hardware task scheduler performs task scheduling to select a candidate task for the CPU core, and actively sends metadata of the candidate task to the first storage area. When task switching is needed, the CPU core no longer sends a task scheduling instruction, but directly reads the metadata of the candidate task from the first storage area, and prefetches the context of the candidate task to a cache of the CPU core. The CPU core reads the context of the candidate task from the cache to perform the task switching. The procedure of the task scheduling method includes the following steps.

Step 601: The hardware task scheduler monitors the first storage area of the CPU core. If there is no to-be-executed candidate task in the storage area, the hardware task scheduler performs task scheduling to select a candidate task, and actively sends metadata of the candidate task to the storage area.

Step 602: The CPU core reads the metadata of the candidate task from the first storage area.

When detecting that task switching is needed, the CPU core no longer sends a task scheduling instruction, but directly reads the metadata of the candidate task from the first storage area.

After obtaining the metadata of the candidate task, the CPU core performs step 603. Then, the CPU core continues to execute the current task or performs an operation before the task switching. After the operation before the task switching is completed, the CPU core performs step 604.

Step 603: The CPU core prefetches a context of the candidate task, so that the context of the candidate task is sent to the cache.

After obtaining the metadata of the candidate task, the CPU core reads storage location information of the context of the candidate task from the metadata. The CPU core prefetches the context of the candidate task based on the storage location information of the context of the candidate task. For example, the CPU core sends a prefetch instruction to a bus, so that the context of the candidate task is sent to the cache. A parameter carried in the prefetch instruction includes the storage location information of the context of the candidate task.

Step 604: The CPU core reads the context of the candidate task.

After the operation before the task switching is completed, the CPU core reads the context based on the foregoing storage location information. Because the context has been sent to the cache, the CPU core reads the context from the cache.

Step 605: The CPU core sends metadata of a switched task to a second storage area.

Step 606: The hardware task scheduler monitors the second storage area, reads the metadata of the switched task from the storage area, and stores the metadata of the switched task in a candidate task queue of the hardware task scheduler.

The hardware task scheduler monitors the second storage area. Once it is found that the metadata of the task is stored in the second storage area, the hardware task scheduler reads the metadata of the task from the second storage area and writes the metadata of the task into the candidate task queue of the hardware task scheduler. When performing subsequent task scheduling, the hardware task scheduler may select the task again, so that the task is executed by the CPU core again.

Step 607: The CPU core performs task switching to run the candidate task.

After obtaining the context of the candidate task, the CPU core switches the context to execute the candidate task.

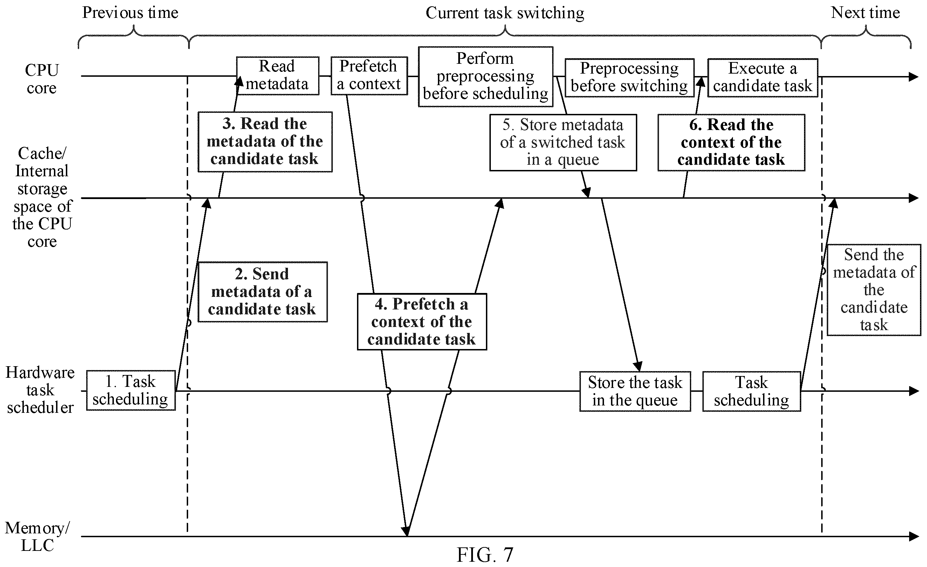

In conclusion, a time-sequence diagram of the task scheduling method according to this embodiment of this application is shown in FIG. 7. The hardware task scheduler pre-executes task scheduling, and pre-sends the metadata of the selected candidate task to the first storage area. When the CPU core detects that task switching is needed, the CPU core no longer sends a task scheduling instruction, but directly reads the metadata of the candidate task from the first storage area. After the metadata of the candidate task is read, the CPU core prefetches the context of the candidate task, so that the context of the candidate task is sent to the cache. In other words, when task switching is needed, the CPU core may directly read the metadata of the candidate task from the first storage area, and read the context of the candidate task from the cache. The CPU core directly reads the metadata of the candidate task from the first storage area, and reads the context of the candidate task from the cache, so that latency of the task switching is reduced. In addition, in this embodiment, the CPU core does not need to directly interact with the hardware task scheduler. Therefore, according to the task scheduling method provided in this embodiment, not only latency of the task scheduling and switching is reduced, but also the direct interaction between the CPU core and the hardware task scheduler is avoided.

The following is apparatus embodiments of this application, and can be used for executing the method embodiments of this application. For details not disclosed in the apparatus embodiments of this application, refer to the method embodiments of this application.

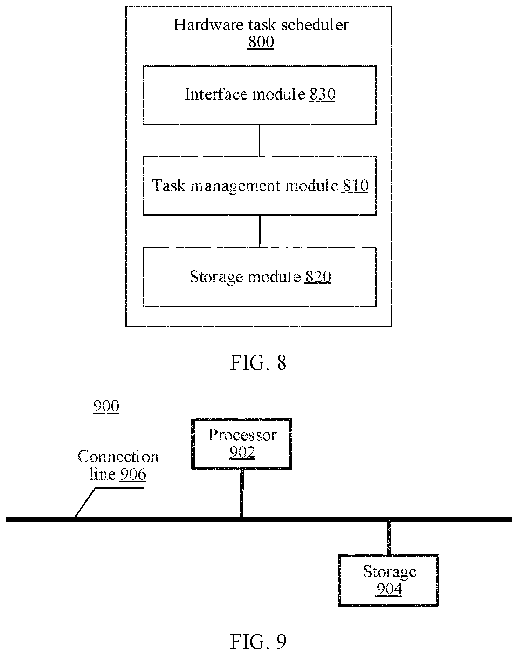

FIG. 8 is a schematic diagram of a logical structure of a hardware task scheduler 800 according to an embodiment of this application. Refer to FIG. 8. The hardware task scheduler 500 includes a task management module 810 and a storage module 820. The task management module 810 is configured to perform step 202 and step 203 in the embodiment shown in FIG. 2, step 401 and step 404 in the embodiment shown in FIG. 4, or step 601 in the embodiment shown in FIG. 6. The storage module 820 is configured to store metadata of a candidate task in an execution process of the task management module 510.

Specifically, the task management module 810 is configured to: perform task scheduling to select a candidate task, and actively send metadata of the candidate task to a first storage area.

The storage module 820 is configured to store metadata of one or more candidate tasks, so that the task management module 810 selects the candidate task.

Optionally, the task management module 810 is further configured to perform step 204 in the embodiment shown in FIG. 2. The task management module 810 is further configured to actively send a context of the candidate task to a cache.

Optionally, the storage module 820 is further configured to store the context of the candidate task.

Optionally, the task management module 810 is further configured to perform step 402 and step 405 in the embodiment shown in FIG. 4. The task management module 810 is further configured to: obtain the context of the candidate task, and store the context of the candidate task in the hardware task scheduler. The task management module 810 is further configured to actively send the context that is of the candidate task and that is stored in the hardware task scheduler to the cache.

Optionally, the task management module 810 is further configured to perform step 207 in the embodiment shown in FIG. 2, step 408 in the embodiment shown in FIG. 4, or step 606 in the embodiment shown in FIG. 6. The task management module 810 is configured to: receive metadata that is of a switched task and that is sent by a CPU core, and store the metadata of the switched task in the hardware task scheduler. Alternatively, the task management module 810 is configured to: read metadata of a switched task from a second storage area, and store the metadata of the switched task in the hardware task scheduler.

Optionally, the hardware task scheduler 800 further includes an interface module 830. The interface module 830 is configured to send instructions sent by the task management module 810 during execution of the foregoing steps.

It should be noted that when the hardware task scheduler according to the foregoing embodiment performs task scheduling, division of the foregoing functional modules is merely used as an example for description. In actual application, the foregoing functions may be allocated to different functional modules for implementation based on a requirement. In other words, an internal structure of a device is divided into different functional modules to implement all or some of the functions described above. In addition, the hardware task scheduler according to the foregoing embodiment and the task scheduling method embodiments belong to a same concept. For a specific implementation process of the hardware task scheduler, refer to method embodiments. Details are not described herein again.

FIG. 9 is a schematic diagram of a hardware structure of a hardware task scheduler 900 according to an embodiment of this application. Refer to FIG. 9. The hardware task scheduler 900 includes a task management processor 902, a storage 904, and a connection line 906. The processor 902 and the storage 904 are connected to each other through the connection line 906.

The storage 904 may be various types of storage media, for example, a static random access memory (static random access memory, SRAM).

The processor 902 may be a general-purpose processor. For example, the general-purpose processor may be a central processing unit (CPU). In addition, the processor 902 may alternatively be a dedicated processor. The dedicated processor may be a processor specially designed to perform a specific step and/or operation. For example, the dedicated processor may be a digital signal processor (digital signal processor, DSP), an application-specific integrated circuit (application-specific integrated circuit, ASIC), a field-programmable gate array (field-programmable gate array, FPGA), or the like. In addition, the processor 902 may alternatively be a combination of a plurality of processors. The processor 902 may include at least one circuit, to perform a step that the hardware task scheduler in the task scheduling method according to the foregoing embodiments is responsible for performing.

The connection line 906 may be connection lines in a plurality of forms, for example, an interconnection wiring on a silicon wafer, a silicon interposer (Si Interposer) wiring, and a printed circuit board (printed circuit board, PCB) wiring.

The foregoing components may be separately disposed on chips that are independent of each other, or at least some or all of the components may be disposed on a same chip. Whether the components are separately disposed on different chips or integrated and disposed on one or more chips usually depends on a requirement of a product design. A specific implementation form of the foregoing components is not limited in this embodiment of this application.

The hardware task scheduler 900 shown in FIG. 9 is merely an example. In an implementation process, the hardware task scheduler 900 may further include other components, which are not listed one by one in this specification.

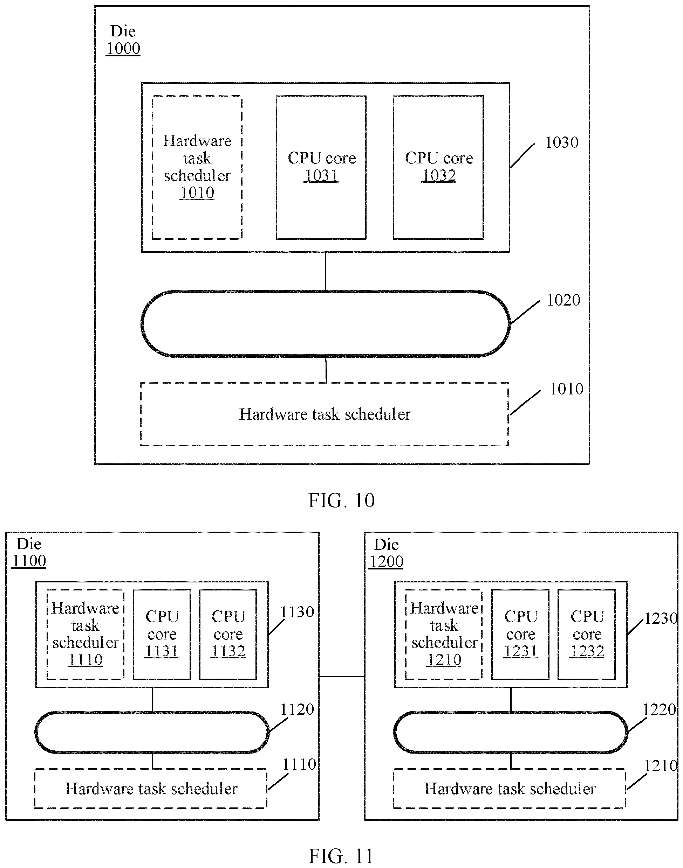

FIG. 10 is a schematic diagram of a task scheduling system according to an embodiment of this application. Refer to FIG. 10. The task scheduling system includes a CPU 1030 and a hardware task scheduler 1010. The CPU 1030 and the hardware task scheduler 1010 are located on a die (Die) 1000. The CPU 1030 includes one or more CPU cores. For example, the CPU 1030 includes two CPU cores: a CPU core 1031 and a CPU core 1032. The hardware task scheduler 1010 performs task scheduling for the CPU core 1031 to select a candidate task, and actively sends metadata of the candidate task to a first storage area of the CPU core 1031. Alternatively, the hardware task scheduler 1010 performs task scheduling for the CPU core 1032 to select a candidate task, and sends metadata of the candidate task to a first storage area of the CPU core 1032. The hardware task scheduler 1010 may be deployed in a plurality of manners. For example, the hardware task scheduler 1010 is located in the CPU 1030. Alternatively, the hardware task scheduler is located outside the CPU 1030, and is connected to the CPU 1030 through an on-chip bus 1020.

When the CPU 1030 includes only one CPU core, for example, the CPU 1030 includes only the CPU core 1031, the hardware task scheduler provides a task scheduling service for the CPU core 1031. In this case, the hardware task scheduler provides a task scheduling service for the CPU 1030.

FIG. 11 is a schematic diagram of another task scheduling system according to an embodiment of this application. In the task scheduling system, a hardware task scheduler may provide a task scheduling service for a CPU core in another die. Refer to FIG. 11. The task scheduling system includes a plurality of dies. For example, the task scheduling system includes two dies: a die 1100 and a die 1200. The die 1100 includes a CPU 1130. The die 1200 includes a CPU 1230. The CPU 1130 includes one or more CPU cores. The CPU 1230 includes one or more CPU cores. For example, the CPU 1130 includes two CPU cores: a CPU core 1131 and a CPU core 1132. The CPU 1230 includes two CPU cores: a CPU core 1231 and a CPU core 1232. The task scheduling system includes one or more hardware task schedulers. For example, the task scheduling system includes a hardware task scheduler 1110. The hardware task scheduler 1110 provides task scheduling for the CPU core 1131, CPU core 1132, the CPU core 1231, and the CPU core 1232 to select a candidate task, and actively sends metadata of the candidate task to a first storage area of a corresponding CPU core. The hardware task scheduler 1110 may be deployed in a plurality of manners. For example, the hardware task scheduler 1110 is located in the CPU 1130. Alternatively, the hardware task scheduler 1110 is located outside the CPU 1130, and is connected to the CPU 1130 through an on-chip bus 1120. For example, the task scheduling system may further include a hardware task scheduler 1210. The hardware task scheduler 1210 is located in the CPU 1230. Alternatively, the hardware task scheduler 1210 is located outside the CPU 1230, and is connected to the CPU 1230 through an on-chip bus 1220. The hardware task scheduler 1210 provides task scheduling for the CPU core 1231 and the CPU core 1232 to select a candidate task, and actively sends metadata of the candidate task to a first storage area of the CPU core 1231 or a first storage area of the CPU core 1232.

The hardware task scheduler may further be deployed in a plurality of manners. For example, a plurality of hardware task schedulers are deployed in a die, and each hardware task scheduler separately provides a task scheduling service for one CPU core. All deployment manners are not listed one by one in this embodiment of this application.

It should be understood that sequence numbers of the foregoing processes do not mean execution sequences in embodiments of this application. The execution sequences of the processes should be determined based on functions and internal logic of the processes, and should not be construed as any limitation on the implementation processes of embodiments of this application.

The objectives, technical solutions, and benefits of the present invention are further described in detail in the foregoing specific implementations. It should be understood that the foregoing descriptions are merely specific implementations of the present invention, but are not intended to limit the protection scope of the present invention. Any modification, equivalent replacement, or improvement made based on the technical solutions of the present invention shall fall within the protection scope of the present invention.

## Claims

1. A task scheduling system, wherein the task scheduling system comprises a central processing unit CPU core and a hardware task scheduler, wherein
the hardware task scheduler is configured to: perform task scheduling to select a candidate task, and actively send metadata of the candidate task to a first storage area; and
the CPU core is configured to read the metadata of the candidate task from the first storage area to execute the candidate task, wherein
the first storage area is located in a storage area whose access speed is higher than that of a memory, and the first storage area comprises internal storage space of the CPU core and/or a cache of the CPU core.

2. The system according to claim 1, wherein the metadata of the candidate task comprises storage location information of a context of the candidate task, an identifier of the candidate task, and a status of the candidate task.

3. The system according to claim 1 or 2, wherein
the hardware task scheduler is further configured to actively send the context of the candidate task to the cache of the CPU core.

4. The system according to claims 1 to 3, wherein
the hardware task scheduler is further configured to actively send the context that is of the candidate task and that is stored in the hardware task scheduler to the cache of the CPU core.

5. A task scheduling method, applied to a hardware task scheduler, wherein the method comprises:
performing task scheduling to select a candidate task; and
actively sending metadata of the candidate task to a first storage area, wherein
the first storage area is located in a storage area whose access speed is higher than that of a memory, the first storage area comprises internal storage space of a CPU core and/or a cache of the CPU core, and the CPU core is configured to perform the candidate task.

6. The method according to claim 5, wherein the metadata of the candidate task comprises storage location information of a context of the candidate task, an identifier of the candidate task, and a status of the candidate task.

7. The method according to claim 5 or 6, wherein the method comprises: actively sending the context of the candidate task to the cache of the CPU core.

8. The method according to any one of claims 5 to 7, wherein the method comprises: actively sending the context that is of the candidate task and that is stored in the hardware task scheduler to the cache of the CPU core.

9. A task scheduling method, applied to a central processing unit CPU core, wherein the method comprises:
reading metadata of a candidate task from a first storage area to perform the candidate task, wherein the first storage area is located in a storage area whose access speed is higher than that of a memory, and the first storage area comprises internal storage space of the CPU core and/or a cache of the CPU core.

10. The method according to claim 9, wherein the metadata of the candidate task comprises storage location information of a context of the candidate task, an identifier of the candidate task, and a status of the candidate task.

11. A hardware task scheduler, comprising:
a storage, configured to store metadata of one or more candidate tasks; and
a processor, configured to: perform task scheduling to select a candidate task, and actively send metadata that is of the selected candidate task and that is stored in the storage to a first storage area, wherein the first storage area is located in a storage area whose access speed is higher than that of a memory, the first storage area comprises internal storage space of a CPU core and/or a cache of the CPU core, and the CPU core is configured to perform the selected candidate task.

12. The hardware task scheduler according to claim 11, wherein the metadata of the selected candidate task comprises storage location information of a context of the selected candidate task, an identifier of the selected candidate task, and a status of the selected candidate task.

13. The hardware task scheduler according to claim 11 or 12, wherein the processor is further configured to actively send the context of the selected candidate task to the cache of the CPU core.

14. The hardware task scheduler of any one of claims 11 to 13, wherein the storage is further configured to store the context of the selected candidate task.

15. The hardware task scheduler according to claim 14, wherein the processor is further configured to actively send the context that is of the selected candidate task and that is stored in the storage to the cache of the CPU core.

16. A hardware task scheduler, wherein the hardware task scheduler comprises:
a storage module, configured to store metadata of one or more candidate tasks; and
a task management module, configured to: perform task scheduling to select a candidate task, and actively send metadata that is of the selected candidate task and that is stored in the storage module to a first storage area, wherein the first storage area is located in a storage area whose access speed is higher than that of a memory, the first storage area comprises internal storage space of a CPU core and/or a cache of the CPU core, and the CPU core is configured to perform the selected candidate task.

17. The hardware task scheduler according to claim 16, wherein the metadata of the selected candidate task comprises storage location information of a context of the selected candidate task, an identifier of the selected candidate task, and a status of the selected candidate task.

18. The hardware task scheduler according to claim 16 or 17, wherein the task management module is further configured to actively send the context of the selected candidate task to the cache of the CPU core.

19. The hardware task scheduler according to any one of claims 16 to 18, wherein the storage module is further configured to store the context of the selected candidate task.

20. The hardware task scheduler according to claim 19, wherein the task management module is further configured to actively send the context that is of the selected candidate task and that is stored in the storage module to the cache of the CPU core.
